# EUROPÄISCHE PATENTSCHRIFT

(11) **EP 0 720 696 B1**
(45) Veröffentlichungstag und Bekanntmachung des Hinweises auf die Patenterteilung: **03.12.1997**
(21) Anmeldenummer: 94928349.3
(22) Anmeldetag: 14.09.1994
(51) Int. Cl.: F16C 1/12, F16D 65/22

(54) **MECHANISCHE BETÄTIGUNGSVORRICHTUNG, INSBESONDERE FÜR KRAFTFAHRZEUGBREMSEN**
MECHANICAL ACTUATOR, ESPECIALLY FOR MOTOR VEHICLE BRAKES
SYSTEME MECANIQUE D'ACTIONNEMENT, NOTAMMENT POUR FREINS D'AUTOMOBILES

(30) Priorität: 22.09.1993 DE 9314350 U
(43) Veröffentlichungstag der Anmeldung: 10.07.1996
(73) Patentinhaber: LUCAS INDUSTRIES PUBLIC LIMITED COMPANY, Solihull, West Midlands B91 3TX (GB)
(72) Erfinder: WAGNER, Lothar, D-56414 Steinefrenz (DE); MADZGALLA, Frank, D-56070 Koblenz (DE)
(74) Vertreter: Goetz, Rupert, Dipl.-Ing.
(86) Internationale Anmeldenummer: EP9403073
(87) Internationale Veröffentlichungsnummer: WO9508719

(56) Entgegenhaltungen:
- EP-A- 0 142 421
- EP-A- 0 184 092
- EP-A- 0 311 346
- DE-U- 8 707 917
- US-A- 4 069 721
- US-A- 5 142 935

## Beschreibung

Die Erfindung betrifft eine mechanische Betätigungsvorrichtung für Kraftfahrzeugbremsen nach dem Oberbegriff des Anspruchs 1. Eine derartige mechanische Betätigungsvorrichtung ist aus der DE-U-87 07 917 bekannt.

Sie werden beispielsweise für Feststellbremsungen in Kraftfahrzeuge eingebaut.

Aus der EP-B-0 403 635 ist eine Scheibenbremse bekannt, die für Betriebsbremsungen hydraulisch und für Feststellbremsungen mit einer Betätigungsvorrichtung der genannten Gattung betätigbar ist. Die Bremse hat ein Gehäuse, in dem ein hydraulischer Zylinder ausgebildet ist, und an dem eine mit dem Zylinder gleichachsige Welle gelagert ist. An einem aus dem Gehäuse herausragenden Wellenende ist ein Hebel für Feststellbremsungen befestigt, der einen von der Welle entfernten Endabschnitt mit einem radial wegragenden Schenkel und einem zurückgebogenen Schenkel aufweist. Zwischen diesen beiden Schenkeln ist ein Schlitz ausgebildet, in den sich ein Seil eines Bowdenzuges einlegen läßt. Die beiden Schenkel haben dem Schlitz benachbarte Seitenflächen, die gemeinsam ein Widerlager für ein verdicktes Endstück des Seils bilden. Dieses Widerlager ist so geformt, daß das Endstück an ihm einen sicheren Halt findet, wenn und solange das Seil wenigstens leicht gespannt ist. Beim Einbau einer solchen Betätigungsvorrichtung in ein Kraftfahrzeug wird der Bowdenzug so eingestellt, daß das Seil schon in unbetätigtem Zustand wenigstens leicht gespannt ist, so daß ein Totgang beim mechanischen Betätigen der Bremse weitgehend vermieden wird.

Solche Betätigungsvorrichtungen werden üblicherweise beim Hersteller des zu betätigenden Aggregats, beispielsweise einer Kraftfahrzeugbremse, mit dem Aggregat zusammengebaut und mit diesem gemeinsam an den Einbauort, beispielsweise ein Fließband eines Kraftfahrzeugherstellers, geliefert. Dort wird der von der Bremse oder dergl. entfernte Endbereich des Bowdenzuges mit einem zugehörigen Betätigungsglied verbunden, beispielsweise mit einem Handbremsstock, wobei zwischen diesem und zwei Bowdenzügen für je eine Hinterradbremse üblicherweise ein waagebalkenartiges Zwischenglied angeordnet wird, das für gleichmäßige Kraftverteilung auf beide Bremsen sorgt. Bei den in diesem Bereich erforderlichen Montagearbeiten kann es vorkommen, daß vorübergehend anstelle einer Zugkraft eine Schubkraft auf ein Seil einer Betätigungsvorrichtung der genannten Gattung ausgeübt wird. Wenn sich das Seil dabei im zugehörigen Bowdenzug verschiebt, kann sich das der Bremse oder dergl. zugeordnete Endstück soweit vom Widerlager entfernen, daß es beim anschließenden Spannen des Seils aus dem zugehörigen Schlitz herausrutscht und nicht zum Widerlager zurückkehrt. Es ist dann erforderlich, das Seil wieder zu lockern, es erneut in den Schlitz des Hebels einzulegen und dafür zu sorgen, daß das verdickte Endstück sich an das Widerlager anlegt, ehe das Seil vom anderen, dem Bremsstock oder dergleichen benachbarten Ende her erneut gespannt wird.

Der Erfindung liegt die Aufgabe zugrunde, die Montage mechanischer Betätigungsvorrichtungen der eingangs genannten Gattung, insbesondere deren Einbau in ein Kraftfahrzeug, zu vereinfachen.

Die Aufgabe ist erfindungsgemäß durch die Merkmale des Anspruchs 1 gelöst.

Damit wird erreicht, daß das Seil sich nicht mehr unbeabsichtigt vom Hebel lösen kann. Dennoch kann man das Seil bei Bedarf leicht demontieren, indem man es in einem an das verdickte Endstück angrenzenden Bereich derart biegt, daß das Endstück am Vorsprung vorbeibewegt wird, worauf das Seil dann ohne weiteres aus dem Schlitz herausgeschoben werden kann.

Vorteilhafte Weiterbildungen der Erfindung ergeben sich aus den Unteransprüchen.

Ein Ausführungsbeispiel der Erfindung wird im folgenden anhand schematischer Zeichnungen mit weiteren Einzelheiten beschrieben. In den Zeichnungen zeigen:
- Fig. 1: eine Seitenansicht einer Kraftfahrzeug-Scheibenbremse mit erfindungsgemäßer Betätigungsvorrichtung,
- Fig. 2: Einzelheiten aus Fig. 1,
- Fig. 3: die Ansicht in Richtung des Pfeils III in Fig. 2 und
- Fig. 4: die Ansicht in Richtung des Pfeils IV in Fig. 2.

Die dargestellte Kraftfahrzeugbremse ist eine Teilbelag-Scheibenbremse mit einem Bremsträger 10, der den radial äußeren Rand einer nicht dargestellten Bremsscheibe umgreift, und mit einem Schwimmsattel 12, der auf einem Paar Bolzen 14 parallel zur Achse der Bremsscheibe verschiebbar am Bremsträger 10 geführt ist und ebenfalls die Bremsscheibe sowie zusätzlich ein Paar Bremsbacken 16 umgreift. Der Schwimmsattel 12 hat ein Gehäuse 18, in dem ein Zylinder für hydraulische Bremsbetätigungen angeordnet und eine Welle 20 gelagert ist. Die Welle 20 hat ein aus dem Gehäuse 18 herausragendes Ende, an dem ein im wesentlichen radial von ihr wegragender Hebel 22 gelagert ist. Die Welle 20 ist parallel zu den beiden Bolzen 14 angeordnet; ihre geometrische Achse wird im folgenden als Schwenkachse A des Hebels 22 bezeichnet. Soweit bisher beschrieben, ist die dargestellte Bremse von üblicher Bauart, beispielsweise gemäß der schon eingangs genannten EP-B-0 403 635.

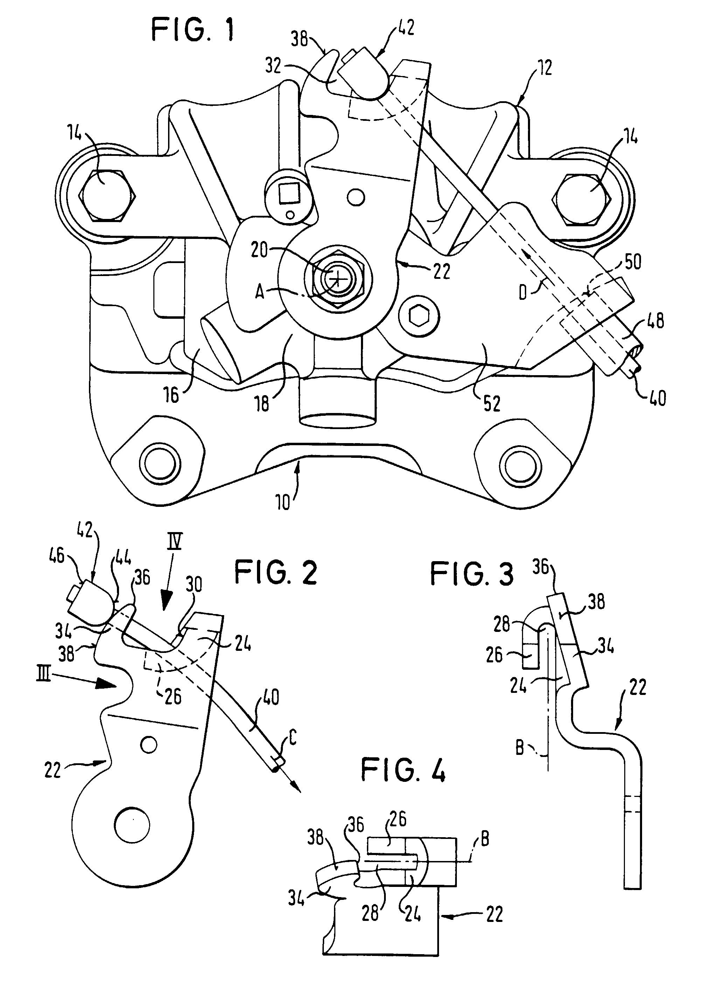

Der Hebel 22 ist aus Stahlblech ausgestanzt und hat, gemäß Fig. 1 und 2 in Richtung seiner Schwenkachse A betrachtet, ungefähr die Form eines Gabelschlüssels mit einem rechten Zinken, der so abgekantet ist, daß er einen sich ungefähr radial von der Schwenkachse A wegerstreckenden Schenkel 24 sowie einen zurückgebogenen Schenkel 26 aufweist. Zwischen diesen Schenkeln 24 und 26 ist ein Schlitz 28 in einer zur Schwenkachse A normalen Ebene B freigelassen. Die beiden an den Schlitz 28 angrenzenden, in Fig. 1 und 2 nach links weisenden Kanten der beiden Schenkel 24 und 26 bilden gemeinsam ein konkaves Widerlager 30.

Vom Widerlager 30 durch einen Zwischenraum 32 getrennt, weist der Hebel einen Vorsprung 34 auf, der bei Betrachtung gemäß Fig. 1 und 2 den linken Zinken des einem Gabelschlüssel ähnlichen Hebels 22 bildet und zu seinem freien Ende 36 hin schlanker wird. Der Hebel 22 ist gemäß Fig. 3 und 4 als ganzes gekröpft; zusätzlich ist der Vorsprung 34 derart zur Ebene B hin gebogen, daß sein freies Ende 36 dem Schlitz 28 ungefähr gegenübersteht. An der vom Zwischenraum 32 abgewandten Seite des Vorsprungs 34 ist eine Rampe 38 ausgebildet, die eine Teilzylinderfläche mit einer zur Schwenkachse A parallelen Krümmungsachse darstellt. Die Krümmungsachse liegt gemäß Fig. 2, bezogen auf die Schwenkachse A, radial innerhalb vom Seil 40.

In den Schlitz 28 ist, bezogen auf den Hebel 22 radial von innen her, ein Seil 40 eingelegt, das ein verdicktes Endstück 42 aufweist. In fertig montiertem Zustand liegt das Endstück 42 gemäß Fig. 1 im Zwischenraum 32, wobei es im wesentlichen spielfrei zwischen dem Widerlager 30 und dem Vorsprung 34 aufgenommen ist. Das Endstück 42 ist in üblicher Weise in Bezug auf das Seil 40 rotationssymmetrisch gestaltet und hat eine am Widerlager 30 anliegende halbkugelförmige Fläche 44 sowie, an seinem entgegengesetzten Ende, eine ebene Endfläche 46. Das Seil 40 bildet zusammen mit einem in Fig. 1 angedeuteten Mantel 48 einen handelsüblichen Bowdenzug. Der Mantel 48 stützt sich in üblicher Weise an einem eigenen, ringförmigen Widerlager 50 ab, das im dargestellten Beispiel an einer am Gehäuse 18 befestigten Platte 52 ausgebildet ist.

Zum Montieren des Seils 40 wird dieses erst durch das Widerlager 50 hindurchgesteckt, das ebenfalls geschlitzt sein kann, und dann wird das Seil gemäß Fig. 2 an der vom Betrachter abgewandten Rückseite des Hebels 22 vorbeigeschoben und schließlich von unten her, also bezogen auf die Schwenkachse A radial von innen nach außen, in den Schlitz 28 eingelegt. Das Endstück 42 nimmt dabei eine Stellung mehr oder weniger weit links von der Rampe 38 ein. Sodann wird auf das Seil 40 ein Zug C ausgeübt, so daß das Endstück 42 sich mit seiner halbkugelförmigen Fläche 44 an die Rampe 38 anlegt. Dabei hat das Endstück 42 die Tendenz, in Richtung zum freien Ende 36 der Rampe 38 zu gleiten. Diese Tendenz wird dadurch gefördert, daß der Mantel 48 an seinem Widerlager 50 festgelegt und deshalb bestrebt ist, das Seil 40 in seiner aus Fig. 1 ersichtlichen Lage zu halten. Aus dieser Lage heraus ist das Seil für das Einlegen in den Schlitz 28 gemäß Fig. 2 nach unten gebogen worden, wobei im Seil elastische Rückstellkräfte entstanden sind, welche die Bewegung des Endstücks 42 in Richtung zum freien Ende 36 des Vorsprungs 34 hin unterstützen.

Aus diesen Gründen bewirkt der auf das Seil 40 ausgeübte Zug C letztlich, daß das Endstück 42 gemäß Fig. 1 in den Zwischenraum 32 einrastet und dort zwischen dem Widerlager 30 und dem Vorsprung 34 gefangen bleibt. Wenn nun, beispielsweise beim Einbau der Bremse und ihrer Betätigungsvorrichtung in ein Kraftfahrzeug, ein Schub D auf das Seil 40 ausgeübt wird, bleibt das Endstück 42 sicher im Zwischenraum 32 festgehalten; es ist also ausgeschlossen, daß sich das Seil 40 unbeabsichtigt vom Hebel 22 löst. Wenn man aber den Bowdenzug 40, 48 ausbauen will und zu diesem Zweck das Seil 40 von seinem anderen, beispielsweise einem Bremsstock benachbarten Ende her gelockert hat, ist es ein Leichtes, das Endstück 42 beispielsweise mit einem in den Zwischenraum 32 eingesetzten Schraubendreher am Vorsprung 34 vorbei zur Seite zu drücken und dann das Seil 40 aus dem Schlitz 28 herauszuschieben.

## Patentansprüche

1. Mechanische Betätigungsvorrichtung für Kraftfahrzeugbremsen, insbesondere Teilbelag-Scheibenbremsen, mit
- einem Hebel (22), der an einem Gehäuse (18) um eine Schwenkachse (A) schwenkbar gelagert ist,
- einem am Hebel (22) ausgebildeten, sich ungefähr radial von der Schwenkachse (A) wegerstreckenden ersten Schenkel (24), von dem aus ein zweiter Schenkel (26) zurückgebogen ist,
- einem zwischen dem ersten und dem zweiten Schenkel (24,26) freigelassenen Schlitz (28), der eine zur Schwenkachse (A) normale Mittelebene (B) aufweist,
- einem von Kanten des ersten und des zweiten Schenkels (24,26) gebildeten Widerlager (30),
- einem am Hebel (22) ausgebildeten Vorsprung (34), der dem Widerlager (30) unter Bildung eines Zwischenraums (32) gegenübersteht und eine von diesem Zwischenraum (32) abgegewandte Rampe (38) aufweist,
- einem Seil (40), das in den Schlitz (28) einlegbar ist und ein verdicktes Endstück (42) aufweist, das an die Rampe (38) anlegbar und bei Ausübung eines Zuges (C) auf das Seil (40) über die Rampe (38) hinweg in eine Stellung bewegbar ist, in der das Endstück (42) im Zwischenraum (32) aufgenommen, zur Übertragung des Zuges (C) am Widerlager (30) und zur Übertragung von Seilschub (D) am Vorsprung (34) abgestützt ist,
dadurch gekennzeichnet, daß der Vorsprung (34) in Richtung zur Mittelebene (B) des Schlitzes (28) hin gebogen ist und ein freies Ende (36) aufweist, das dem Schlitz (28) gegenübersteht.

2. Betätigungsvorrichtung nach Anspruch 1,
dadurch gekennzeichnet, daß der Hebel (22) aus Stahlblech ausgestanzt ist.

3. Betätigungsvorrichtung nach Anspruch 1 oder 2,
dadurch gekennzeichnet, daß der Hebel (22), in Richtung seiner Schwenkachse (A) betrachtet, die Form eines Gabelschlüssels hat, dessen Zinken vom Vorsprung (34) und vom Widerlager (30) gebildet sind.

4. Betätigungsvorrichtung nach einem der Ansprüche 1 bis 3,
dadurch gekennzeichnet, daß das Endstück (42) des fertig montierten Seils (28) im wesentlichen spielfrei zwischen dem Widerlager (30) und dem Vorsprung (34) aufgenommen ist.

## Claims

1. Mechanical operating mechanism for motor vehicle brakes, in particular spot-type disc brakes, comprising
- a lever (22) which is mounted on a housing (18) to pivot about a pivot axis (A),
- a first limb (24) which is formed on the lever (22) and extends approximately radially away from the pivot axis (A) and from which a second limb (26) is bent over backward,
- a slot (28) left open between the first and second limbs (24, 26) which has a central plane (B) normal to the pivot axis (A),
- an abutment (30) formed by edges of the first and second limbs (24, 26),
- a projection (34) provided on the lever (22) and disposed opposite the abutment (30) such as to form an intermediate space (32), the projection comprising a ramp (38) facing away from said intermediate space (32),
- a cable (40) which is adapted to be placed in the slot (28) and has a butt end (42) which is adapted to bear against the ramp (38) and which, when a pulling force (C) is exerted on the cable (40), is adapted to be moved across the ramp (38) to a position in which the end (42), received in the intermediate space (32), is supported on the projection (34) for transmitting the pulling force (C) onto the abutment (30) and for transmitting the cable pushing force (D),
**characterized** in that the projection (34) is bent in the direction of the central plane (B) of the slot (28) and has a free end (36) which is opposite the slot (28).

2. Operating mechanism according to claim 1,
**characterized** in that the lever (22) is punched from sheet steel.

3. Operating mechanism according to claim 1 or 2,
**characterized** in that the lever (22), when seen in the direction of its pivot axis, has the shape of an openend wrench whose prongs are formed by the projection (34) and the abutment (30).

4. Operating mechanism according to any one of claims 1 to 3,
**characterized** in that the end (42) of the completely assembled cable (28) is received substantially without play between the abutment (30) and the projection (34).

## Revendications

1. Dispositif mécanique d'actionnement pour freins de véhicule automobile, en particulier pour freins à disques à plaquettes comprenant
- un levier (22) monté pivotant autour d'un axe de pivotement (A) sur un support (18),
- une première branche (24) formée sur le levier (22) s'étendant en s'éloignant sensiblement radialement de l'axe de pivotement (A) à partir de laquelle est recourbée en arrière une deuxième branche (26),
- un interstice (28) laissé libre entre la première et la deuxième branche (24, 26) qui présente un plan médian (B) normal à l'axe de pivotement (A),
- une butée (30) formée par des bords de la première et de la deuxième branche (24, 26),
- un ergot (34) formé sur le levier (22), qui fait face à la butée (30) en formant avec celle-ci un espace intermédiaire (32) et présente une rampe (38) opposée à cet espace intermédiaire (32),
- un câble (40) qui peut être introduit dans l'interstice (28) et présente un bout (42) épaissi qui peut s'appuyer sur la rampe (38) et lors de l'exercice d'une traction (C) sur le câble (40) peut être déplacé par-dessus la rampe (38) dans une position dans laquelle le bout (42) est reçu dans l'espace intermédiaire (32) et s'appuie sur la butée (30) pour transmettre la traction (C) et sur l'ergot (34) pour transmettre la poussée du câble (D),
caractérisé en ce que l'ergot (34) est plié dans la direction du plan médian (B) de l'interstice (28) vers celui-ci et présente une extrémité libre (36) qui fait face à l'interstice (28).

2. Dispositif d'actionnement selon la revendication 1,
caractérisé en ce que le levier (22) est découpé à la matrice dans une tôle d'acier.

3. Dispositif d'actionnement selon la revendication 1 ou 2,
caractérisé en ce que le levier (22) a, considéré dans la direction de son axe de pivotement (A), la forme d'une clé à fourche dont les dents sont formées par l'ergot (34) et la butée (30).

4. Dispositif d'actionnement selon l'une des revendications 1 à 3,
caractérisé en ce que le bout (42) du câble (28) en position monté est reçu sensiblement sans jeu entre la butée (30) et l'ergot (34).
